# EUROPEAN PATENT APPLICATION

(11) **EP 3 644 613 A1**
(43) Date of publication of application: **29.04.2020**
(21) Application number: 18869522.5
(22) Date of filing: 23.10.2018
(51) Int. Cl.: H04N 21/2343, H04N 21/43, H04N 7/01

(54) **VIDEO DATA PROCESSING METHOD AND VIDEO DATA PROCESSING DEVICE**

(30) Priority: 24.10.2017 CN 201711001979
(71) Applicant: Shanghai Zhonglian Technologies Ltd., Co, Shanghai 201419 (CN)
(72) Inventor: ZHONG, Guanghua, Nanchang Jiangxi 330008 (CN); ZHENG, Zihao, Nanchang Jiangxi 330008 (CN)
(74) Representative: Ridderbusch, Oliver
(86) International application number: PCT/CN2018/111520
(87) International publication number: WO 2019/080847

(57) **Abstract**

Provided in the present invention are a video data processing method and a video data processing device. The video data processing method comprises the following steps of: converting, by a transmitting end, video data into at least one video data frame at a first framerate; transmitting once, by the transmitting end, a video data frame generated within a duration of a previous frame to a receiving end within a duration of each frame corresponding to the first framerate, wherein a ratio of a data transmission time in a transmission cycle of each video data frame to the transmission cycle is less than or equal to one half; receiving respectively, by the receiving end, one video data frame within durations of two adjacent frames; performing frame insertion operation on the two video data frames received in the preceding step to produce at least one inserted video data frame; and placing the inserted video data frame between the two video data frames to form a set of video data frames to be played back. When implemented, the technical solution above effectively reduces delay in a video data processing process, thus enhancing user experience.

## Description

### Technical Field

The present invention relates to the field of video processing, and more particularly, to a video data processing method and a video data processing device.

### Background Art

When playing a video by a video playback device, people need to decode video data and then transmit the video data to the playback device, for example, stored video data is decoded by a display card and then transmitted to a display screen at a certain framerate, and a decoding device is connected with the display screen by a video transmission interface such as MIPI, HDMI and DisplayPort. At present, the existing video framerates are 15 fps, 24 fps and 30 fps, and in the case of realizing a smooth viewing effect with human eyes, the framerate needs to be kept above 60 fps, which is also the reason why a refresh rate of the display screen is above 60 hz. However, since the framerate of the video data is different from the refresh rate of the display screen, lagging or jittering may occur when the video data is displayed on the display screen.

In order to solve the lagging problem, there is a video enhancement algorithm called MEMC (Motion Estimate and Motion Compensation) in the prior art, and the video enhancement algorithm performs frame insertion on the video data according to a motion vector of an object, so that a number of frames of the video data is equal to a number of frames required for refreshing the display screen. Since the number of the frames of the video data after the frame insertion is the same as the number of the frames on the display screen, and the video data only needs to be processed frame by frame on the display screen, the lagging or jittering problem will not occur on the display screen.

However, when the MEMC video enhancement algorithm is used to solve the lagging and jittering problems of the video, since at least two frames of data are required for calculating a frame insertion content in calculation of the motion vector, display of the video data will be delayed. That is to say, the inserted frame can only be calculated at least after receiving the second frame of video data participating in frame insertion operation, and delay in display of the video data on the display screen includes a waiting time for receiving the first frame of video data and the second frame of video data and a calculation time of the inserted frame, wherein the calculation time of the inserted frame is much less than a transmission time of the first frame of video data. For example, the framerate of the video data is 30 fps per second, and a waiting time for two frames is 66.6 ms, which means that the delay in display is at least 66.6 ms. If the video data and a user are interacted, such as a game operation interface, the delay in display will cause a problem of asynchronous interaction, thus reducing interactive operation experience of the user.

### Summary of the Invention

In order to overcome the defects in the prior art, the present invention is intended to provide a video data processing method and a video data processing device to realize a technical effect of reducing video processing delay by increasing a transmission speed of video data and advancing frame insertion operation.

The present invention discloses a video data processing method for processing video data transmitted from a transmitting end working at a first framerate to a receiving end working at a second framerate, which includes the following steps:
S101: converting, by the transmitting end, the video data into at least one video data frame at the first framerate;
S102: transmitting once, by the transmitting end, a video data frame generated within a duration of a previous frame to the receiving end within a duration of each frame corresponding to the first framerate, wherein a ratio of a data transmission time in a transmission cycle of each video data frame to the transmission cycle is less than or equal to one half;
S103: receiving respectively, by the receiving end, one video data frame within durations of two adjacent frames corresponding to the first framerate;
S104: performing frame insertion operation on the two video data frames received in the step S103 to produce at least one inserted video data frame; and
S105: placing the inserted video data frame between the two video data frames to form a set of video data frames to be played back.

Preferably, when the step S102 is implemented, the transmitting end transmits the video data frame to the receiving end through a physical interface.

Preferably, the following steps are implemented within the duration of each frame corresponding to the first framerate in the step S102:
S102-1: writing one video data frame into a cache unit in the transmitting end;
S102-2: transmitting a control signal and an auxiliary signal to the physical interface;
S102-3: transmitting the video data frame to the physical interface within a preset time threshold; and
S102-4: waiting for end of current transmission cycle.

Preferably, when the step S102-3 is implemented, a ratio of a frequency of a line synchronization signal to a reference frequency is adjusted to be at least 2; and when the step S103 is implemented, frequency division is performed on the received line synchronization signal according to the ratio.

Preferably, after the step S105, the video data processing method further comprises the following step:
S106: displaying, by the receiving end, the video data frame to be played back at the second framerate.

The present invention further discloses a video data processing device, which includes a transmitting end working at a first framerate and a receiving end working at a second framerate, wherein the video data processing device includes:
a conversion module arranged at the transmitting end and converting the video data into at least one video data frame at the first framerate;
a transmitting module arranged at the transmitting end, connected with the conversion module, and transmitting once a video data frame generated within a duration of a previous frame to the receiving end within a duration of each frame corresponding to the first framerate, wherein a ratio of a data transmission time in a transmission cycle of each video data frame to the transmission cycle is less than or equal to one half;
a receiving module arranged at the receiving end, and receiving respectively one video data frame within durations of two adjacent frames corresponding to the first framerate;
a frame insertion operation module arranged at the receiving end, connected with the receiving module, and performing frame insertion operation on the two video data frames received by the receiving module to produce at least one inserted video data frame; and
a framing module arranged at the receiving end, connected with the frame insertion operation module, and placing the inserted video data frame between the two video data frames to form a set of video data frames to be played back.

Preferably, the transmitting module transmits the video data frame to the receiving end through a physical interface.

Preferably, the transmitting module includes:
a cache unit arranged at the transmitting end and writing one video data frame within a duration of one frame corresponding to the first framerate;
a signal transmission unit arranged at the transmitting end and transmitting a control signal and an auxiliary signal to the physical interface;
a data transmission unit arranged at the transmitting end, connected with the cache unit, and transmitting the video data frame to the physical interface within a preset time threshold; and
a cycle compensation unit waiting for end of current transmission cycle.

Preferably, when the data transmission unit transmits the video data frame, a ratio of a frequency of a line synchronization signal to a reference frequency is adjusted to be at least 2; and the receiving module performs frequency division on the received line synchronization signal according to the ratio.

Preferably, the video data processing device further includes:
a playback module displaying the video data frame to be played back at the second framerate.

The present invention has the following beneficial effects compared with the prior art when the technical solutions above are adopted:
1. delay in a video data processing process is effectively reduced, and a real-time performance of interactive operation is improved, thus enhancing user experience; and
2. a hardware device does not need to be changed, thus having low costs.

### Brief Description of the Drawings

Fig. 1 is a flow chart complying with the video data processing method according to a preferred embodiment of the present invention;
Fig. 2 is a flow chart complying with the step S102 according to a preferred embodiment of the present invention;
Fig. 3 is a structure flow chart complying with the video data processing device according to a preferred embodiment of the present invention; and
Fig. 4 is a structure flow chart complying with the transmitting module according to a preferred embodiment of the present invention.

### Reference numerals:

10 refers to video data processing device, 11 refers to transmitting end, 111 refers to conversion module, 112 refers to transmitting module, 1121 refers to cache unit, 1122 refers to signal transmission unit, 1123 refers to data transmission unit, 1124 refers to cycle compensation unit, 12 refers to receiving end, 121 refers to receiving module, 122 refers to frame insertion operation module, 123 refers to framing module, and 124 refers to playback module.

### Detailed Description of the Preferred Embodiments

The advantages of the present invention are further described hereinafter with reference to the drawings and the specific embodiments.

The exemplary embodiments are described in detail herein, and are illustratively shown in the drawings. When the following description refers to the drawings, unless otherwise indicated, the same numbers in different drawings indicate the same or similar elements. The embodiments described in the following exemplary embodiments do not represent all embodiments consistent with the present disclosure. On the contrary, they are merely examples of devices and methods consistent with some aspects of the present disclosure described in detail in the appended claims.

The terms used in the present disclosure are for the purpose of describing particular embodiments only and are not intended to limit the present disclosure. The singular forms of "a", "said" and "the" used in the present disclosure and the appended claims are also intended to include the plural forms, unless other meanings are clearly indicated by the context. It should also be understood that the term "and/or" used herein refers to and includes any or all possible combinations of one or more associated listed items.

It shall be understood that although the terms first, second, third, etc. may be used to describe various information in the present disclosure, the information should not be limited to these terms. These terms are only used to distinguish the information of the same type from each other. For example, the first information can also be referred to as the second information, and similarly, the second information can also be referred to as the first information without departing from the scope of the present disclosure. Depending on the context, the word "if" used herein can be explained as "in the case of", "when" or "in response to determine".

In the description of the present invention, it should be understood that the orientation or position relation indicated by the terms "longitudinal", "lateral", "upper", "lower", "front", "rear", "left", "right", "vertical", "horizontal", "top", "bottom", "inside", "outside" and the like is based on the orientation or position relation shown in the drawings, which is only used for convenience of description of the present invention and simplification of description instead of indicating or implying that the indicated device or element must have a specific orientation, and be constructed and operated in a specific orientation, and thus should not be understood as a limitation to the present invention.

In the description of the present invention, the terms "installation", "connected" and "connection" should be understood in broad sense unless otherwise specified and defined. For example, they can be mechanical connection or electrical connection, can also be connected inside two components, can be directly connected, and can also be indirectly connected through an intermediate medium. The specific meanings of the above terms can be understood in a specific case by those of ordinary skills in the art.

In the following description, the postfixes such as "module", "component" or "unit" used to indicate elements are only used to facilitate the description of the present invention and have no specific meanings in themselves. Therefore, the "module" and "component" can be used in a mixed way.

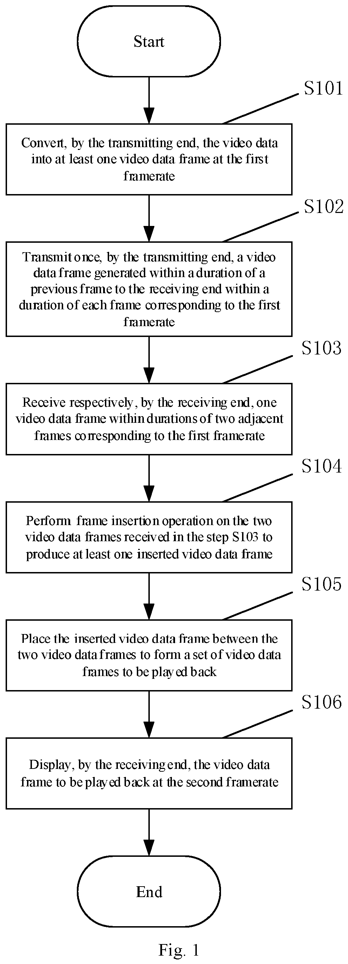

With reference to Fig. 1 which shows a flow chart complying with the video data processing method according to a preferred embodiment of the present invention, the video data processing method includes following steps.

In S101, the transmitting end 11 converts the video data into at least one video data frame at the first framerate.

The transmitting end 11 may be a device with a decoding capability such as a player, a display card, etc., which decodes a video file in a digital format into a playable video signal, and the video signal is composed of multiple frames of video data. Each frame of video data is generated by the transmitting end 11 according to the first framerate, the first framerate may be 15 fps, 24 fps or 30 fps, wherein fps refers to a number of frames transmitted per second, and the more the frames are transmitted per second, the smoother the motion will be displayed. Generally, a minimum value is 30 fps to avoid unsmooth motion, and some computer video formats can only provide 15 frames per second. The video data may be in data formats such as wmv, rmvb, 3gp, mp4, etc., and is often stored in a storage device in a form of a video file. The video data is converted into at least one video data frame in the step, and the video data frame, namely a video data content played back in each frame, is often in a form of a pixel picture, and can be regarded as a picture; and when the first framerate is 15 fps, 15 video data frames exist in 1 second. According to a playback duration of the video data and different first framerates, a number of converted video data frames is also different. The video data frames are bases for subsequent playback operation, and are played back frame by frame by a playback device to realize a dynamic video effect.

In S102, the transmitting end 11 transmits once a video data frame generated within a duration of a previous frame to the receiving end 12 within a duration of each frame corresponding to the first framerate, wherein a ratio of a data transmission time in a transmission cycle of each video data frame to the transmission cycle is less than or equal to one half.

The receiving end 12, namely a video playback device, may be a display screen, a television, etc., and works at a second framerate which may be 60 fps or more. The second framerate may be 2 times or more times of the first framerate to realize a smooth playback effect. Similarly, when a user selects to fast forward, the video playback device will increase the second framerate to realize a fast-forward effect, and the first framerate will also be synchronously increased during fast forwarding.

In the prior art, a duration for the transmitting end 11 to transmit the video data frame is approximately the same as a duration for playing back and displaying one video data frame, which means that when one frame is transmitted, one frame is played back; and the currently transmitted video data frame is a video data frame converted from the video file within the duration of the previous frame. For example, when the first framerate is 30 fps, a duration of each corresponding frame is 33.3 milliseconds, and one video data frame is converted within a duration of each frame in the step S101; a first video data frame is converted by the transmitting end 11 within 0 millisecond to 33.3 milliseconds, then the first video data frame is transmitted to the receiving end 12 within a duration of a second frame ranging from 33.3 milliseconds to 66.6 milliseconds, and the first video data frame is transmitted once only, while the second video data frame is continuously converted by the transmitting end 11; the second video data frame is transmitted to the receiving end 12 by the transmitting end 11 within 66.6 milliseconds to 99.9 milliseconds; and by analogy, the video data frames are continuously transmitted frame by frame until the video file is completely transmitted. A transmission cycle of each video data frame is approximately equal to a duration of one frame, including a data transmission time and an auxiliary transmission time, wherein the data transmission time is substantially and actually the transmission time of the video data frame, the auxiliary transmission time is a transmission time of a control signal, an audio signal or other auxiliary information, is also called a blanking period, and is represented by blanking in software development. The data transmission time accounts for more than 80% of the transmission cycle, which means that data transmission takes up more than half of the transmission cycle.

The prior art above is improved in the step, and the data transmission time is shortened by increasing a transmission speed of the video data frame, thus reducing a ratio of the data transmission time to the transmission cycle, wherein the ratio is less than or equal to one half. The auxiliary transmission time in the transmission cycle can be correspondingly prolonged, so that the transmission cycle remains unchanged and is still approximately equal to the duration of one frame. A key point in the step is that a generation speed and a transmission speed of the video data frame are separated, a technical route that the generation speed and the transmission speed are basically coordinated and synchronized in the prior art is broken through, and the transmission time of the video data is shortened by increasing the transmission speed of the video data frame. The transmission speed of the video data frame can be increased by increasing a utilization rate of a transmission interface. For example, a maximum data transmission speed of a HDMI interface is 48 Gbps, and a 1080 p video and an 8-channel audio signal require less than 0.5 GB/s. Therefore, the transmission interface still has a large improvement capacity, and the transmission speed of the video data frame can be increased by twice or even tens of times.

For example, when the ratio of the data transmission time to the transmission cycle is one third, the first framerate is 30 fps, a duration of each corresponding frame is 33.3 milliseconds, and one video data frame is converted within the duration of each frame in the step S101; the first video data frame is converted by the transmitting end 11 within 0 millisecond to 33.3 milliseconds, and then the first video data frame is transmitted to the receiving end 12 within the duration of the second frame ranging from 33.3 milliseconds to 44.4 milliseconds; and the second video data frame is converted by the transmitting end 11 within 33.3 milliseconds to 66.6 milliseconds, and then the second video data frame is transmitted to the receiving end 12 by the transmitting end 11 within 66.6 milliseconds to 77.7 milliseconds. A transmission time of the second video data frame is 99.9 milliseconds in the prior art, and the transmission time is 77.7 milliseconds in the step, which is 22.2 milliseconds earlier. A transmission time of an auxiliary signal in the transmission cycle is not considered in the time calculation above, and actually, the auxiliary signal of the second video data frame can be completely transmitted within the duration of the previous frame without taking up the duration of the frame, so that the video data frame can be transmitted within the duration of one frame as soon as possible. It shall be noted that the duration of the frame for realizing the step is calculated at the first framerate, namely a playback duration of each frame at the first framerate.

In S103, the receiving end 12 receives respectively one video data frame within durations of two adjacent frames corresponding to the first framerate.

A receiving mode of the receiving end 12 is described in the step. The same video data frame is still transmitted once within the same duration corresponding to the first framerate in the step S102, which means that the receiving end 12 receives the video data frame once at most within the same duration Since the transmission time of the video data frame is compressed in each transmission cycle in the step S102, actually, the receiving end 12 can completely receive the video data frame without needing to wait for end of a duration of current frame, and subsequent frame insertion operation can also be performed in advance. In the step, the receiving end 12 receives one video data frame within durations of two adjacent frames corresponding to the first framerate respectively as a basis for the frame insertion operation in the subsequent step.

For example, when the ratio of the data transmission time to the transmission cycle is one third, the first framerate is 30 fps, the duration of each corresponding frame is 33.3 milliseconds, the receiving end 12 receives once the first video data frame within the duration of the second frame ranging from 33.3 milliseconds to 66.6 milliseconds, and the reception is finished at a moment of a 44.4^{th} millisecond; and the receiving end 12 receives once the second video data frame within a duration of a third frame ranging from 66.6 milliseconds to 99.9 milliseconds, and the reception is finished at a moment of a 77.7^{th} millisecond. Similarly, the receiving end 12 receives one video data frame within every duration of one frame, and by analogy, the video data frame is received once within every durations of two adjacent frames until all the video data are completely received. It shall be noted that the duration of the frame for realizing the step is calculated at the first framerate.

In the prior art, the frame insertion operation can only be performed by relying on two video data frames. Therefore, the receiving end 12 can only receive the first video data frame and the second video data frame at end of the duration of the third frame, and then subsequent frame insertion operation can be performed, so that an inserted frame is actually played back at least until end of the duration of the third frame, namely after a 99.9^{th} millisecond.

A receiving time of the receiving end 12 is compressed in the step, the receiving end 12 completely receives the second video data frame at a 77.7^{th} millisecond in the example above, and then the frame insertion operation can be immediately performed. Since a time of the frame insertion operation is very short relative to the duration of one frame, such as about 3 milliseconds, the inserted frame can be started to play back at an 80^{th} millisecond, which reduces frame insertion delay compared with the prior art and shortens video playback delay as a whole. If the transmitting end 11 transmits the same video data frame faster within the duration of the same frame in the step S102, the receiving end 12 can receive one video data frame in a shorter time within the duration of one frame, and the frame insertion operation is further advanced, thus making video processing delay shorter.

In S104, frame insertion operation is performed on the two video data frames received in the step S103 to produce at least one inserted video data frame.

The frame insertion operation is performed in the step, and objects participating in the operation are the two adjacent video data frames received in the step S103. A common frame insertion operation algorithm is MEMC, with a full name of Motion Estimation and Motion Compensation, which is a motion picture quality compensation technology often used in a liquid crystal display television. A principle thereof is to insert a motion compensation frame between two frames of traditional images by a dynamic image system to increase a refresh rate of an ordinary flat panel television from 50/60 Hz to 100/120 Hz. In this way, a motion picture is clearer and smoother, which is better than a normal response effect, thus realizing effects of removing an afterimage of a previous frame of image and improving a dynamic definition, and reducing image trailing to a degree that the image trailing is difficult for human eyes to perceive. For example, an original frame sequence of a flowing picture is 1, 2, 3, 4, 5 and 6; and the MEMC technology analyzes a motion trend of an image in horizontal and vertical directions through block partition, and then inserts an intermediate frame among all the original frames, namely the inserted video data frame, a frame sequence after frame insertion becomes 1, 1C, 2, 2C, 3, 3C, 4, 4C, 5, 5C and 6, and in this way, an original field frequency is insufficient to display all the frames now. Therefore, the field frequency needs to be increased twice, which means that the field frequency is increased from 50/60 Hz to 100/120 Hz, and thus, it can be seen that the MEMC technology and a frequency multiplication technology are inseparable.

After the frame insertion operation, the receiving end 12 will play back a final video data frame at the second framerate. Considering a multiple relationship between the first framerate and the second framerate, a number of frames inserted between the two video data frames is also different. For example, if the first framerate is 30 fps and the second framerate is 60 fps, one inserted video data frame can be inserted between every two video data frames. If the second framerate is 120 fps, three inserted video data frames shall be inserted between every two video data frames.

In S105, the inserted video data frame is placed between the two video data frames to form a set of video data frames to be played back.

Framing operation is performed in the step, the inserted video data frame obtained in the step S104 is inserted among the received video data frames to form a set of video data frames to be played back, so that a playback device can play back the video data frames frame by frame at a working frequency of hardware, namely the second framerate, without lagging.

As a further improvement to the video data processing method, when the step S102 is implemented, the transmitting end 11 transmits the video data frame to the receiving end 12 through a physical interface. The improved embodiment defines a connection mode of the transmitting end 11 and the receiving end 12, namely connection by the physical interface, and the physical interface is a video transmission interface such as MIPI, HDMI, DisplayPort, etc. The physical interface may be in a high resistance state or other states and in a low power consumption mode after a control signal, an audio signal or other auxiliary information is completely transmitted in the auxiliary transmission time of the transmission cycle.

As a further improvement to the video data processing method, after the step S105, the video data processing method further includes the following step.

In S106, the receiving end 12 displays the video data frame to be played back at the second framerate.

Playback operation is performed in the step, and a set of video data frames including the inserted video data frame after framing are played back on a display device. Each video data frame has recorded pixel information required for playing back a picture, and a hardware device can display the pixel information to play back the video data. Since the steps S103, S104, and S105 are continuously implemented, and video data frames to be played back can be continuously generated, the step does not need to wait for receiving many video data frames before playing back, and the playback operation can be performed at the second framerate after finishing the framing in the step S105.

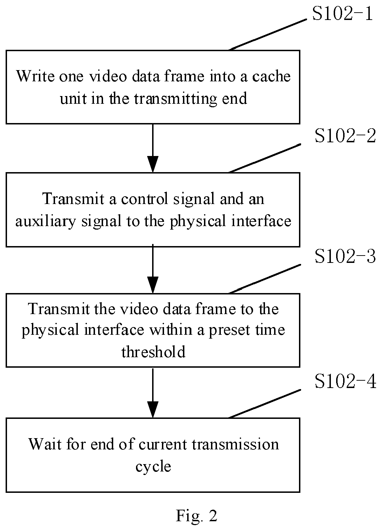

With reference to Fig. 2 which shows a flow chart complying with the step S102 according to a preferred embodiment of the present invention, the following steps are implemented within the duration of each frame corresponding to the first framerate in the step S102.

In S102-1, one video data frame is written into a cache unit 1121 in the transmitting end 11.

After the transmitting end 11 generates the video data frame, the video data frame is stored into the cache unit 1121 in the transmitting end 11, and the cache unit is also called Frame Buffer in some application environments. The step is finished in a code layer, which means that a writing instruction is implemented once to the cache unit 1121 within the duration of one frame.

In S102-2, a control signal and an auxiliary signal are transmitted to the physical interface.

Transmission of the control signal and the auxiliary signal is performed in the step, and transmission of an audio signal may also be included in the step. Transmission times of the signals above and the video data frame are not compressed. According to different physical interfaces, types of the control signals and interface protocols are all different, and different time sequences of the control signals may also exist. Some control signals may cooperate in a transmission process of the video data frame, and may not be implemented separately according to separate steps.

In S102-3, the video data frame is transmitted to the physical interface within a preset time threshold.

The video data frame in the cache unit 1121 is transmitted to the physical interface in the step, which is realized by a driver layer, and software data is converted into an electric signal to be transmitted through the physical interface. The implementation of the step shall satisfy the protocol of the physical interface. The transmission time of the video data frame shall be within a preset time threshold in the step, and the time threshold is less than half of the transmission cycle, which actually limits the transmission time of the video data frame, so as to realize a technical effect of shortening video processing delay.

In S102-4, end of current transmission cycle is waited.

The step is intended to complement a duration of current transmission cycle to ensure a transmission rhythm of the video data frame. Since the transmitting end 11 generates the video data frame at a speed according to the first framerate, even if the transmission speed of the video data frame becomes faster, the video data frame still needs to be transmitted after the transmitting end 11 generates the next video data frame. Therefore, the step is implemented to remain the transmission cycle stable and unchanged.

As a further improvement to the video data processing method, when the step S102-3 is implemented, a ratio of a frequency of a line synchronization signal to a reference frequency is adjusted to be at least 2; and when the step S103 is implemented, frequency division is performed on the received line synchronization signal according to the ratio. The improved embodiment further preferably selects the technical means of shortening the transmission time of the video data frame, which is realized by adjusting the frequency of the line synchronization signal during the transmission of the video data frame. The reference frequency is the frequency of the line synchronization signal when the data transmission time accounts for above 80% of the transmission cycle in the prior art. Line synchronization, also called horizontal synchronization, is a process of controlling an electron beam returning from the right to a starting point (a left end of a screen) in a display screen, and the process is also called a line retrace. With development a digital display technology, when digital video data is transmitted, the line synchronization signal is also called HSYNC, and when the HSYNC is effective, received signals belong to a same line. Correspondingly, a field synchronization signal is also called VSYNC, and when the VSYNC is effective, received signals belongs to a same field. For example, if a picture with a pixel A x B needs to be displayed, then *VSYNC*=*HSYNC*×*B* ; and *HSYNC*=*PLCK*×*A*, wherein PCLK is a pixel point synchronization clock signal, and each PCLK corresponds to a pixel point. The reference frequency is a frequency of the HSYNC in the prior art. According to the calculation relationship above, if the frequency of the HSYNC is increased to 3 times of the reference frequency, and a duty cycle of the VSYNC is unchanged, then the video data frame, namely pixel point data, can be finished within one third of the transmission cycle, and the auxiliary transmission time of two thirds of the transmission cycle, namely a Blinking time, also needs to be inserted. In the improved embodiment, a ratio of the frequency of the line synchronization signal to the reference frequency is at least 2, which means that the transmission time of the video data frame is shortened by at least 1 time. Since the frequency of the line synchronization signal is increased by 1 time, the receiving end 12 needs to perform frequency division on the received line synchronization signal to restore an actual line synchronization time sequence, which can be realized by additionally providing a frequency divider at the receiving end 12, wherein a frequency division multiple of the frequency divider is the ratio of the frequency of the line synchronization signal to the reference frequency. The receiving end 12 also needs to cache the video data frame first and then process the video data frame in cooperation with the line synchronization signal after the frequency division, so as to realize display synchronization.

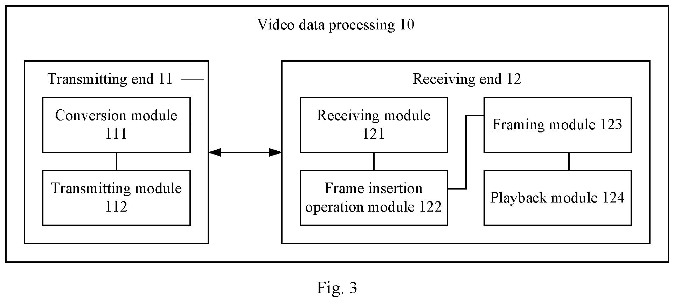

With reference to Fig. 3 which shows a structure flow chart complying with the video data processing device 10 according to a preferred embodiment of the present invention, the video data processing device 10 includes a transmitting end 11 working at a first framerate and a receiving end 12 working at a second framerate, wherein the video data processing device 10 further includes the following modules.

### - Conversion module 111

The conversion module 111 is arranged at the transmitting end 12 and converts the video data into at least one video data frame at the first framerate. The conversion module 111 may be a device with a decoding capability such as a player, a display card, etc., and converts the video data in different data formats into a plurality of video data frames, and the first framerate is satisfied when the video data frame is converted.

### - Transmitting module 112

The transmitting module 112 is arranged at the transmitting end 11, is connected with the conversion module 112, and transmits once a video data frame generated within a duration of a previous frame to the receiving end 12 within a duration of each frame corresponding to the first framerate, wherein a ratio of a data transmission time in a transmission cycle of each video data frame to the transmission cycle is less than or equal to one half. The transmitting module 112 receives the converted video data frame from the conversion module 111 and transmits the converted video data frame to the receiving end 12. The transmitting module 112 makes full use of a capacity of a video data transmission channel, improves a transmission rate, and compresses a transmission time of one video data frame.

### - Receiving module 121

The receiving module 121 is arranged at the receiving end 12, and receives respectively one video data frame within durations of two adjacent frames corresponding to the first framerate. The receiving module 121 receives the video data frame transmitted by the transmitting module 112, and since the transmitting module 112 compresses the transmission time of the video data frame, the receiving module 121 can completely receive the video data frame in the transmission cycle. The receiving module 121 can receive respectively two video data frames within the durations of two adjacent frames, thus providing bases for subsequent frame insertion operation. Since the receiving module 121 receives the video data frame within at most one-half of the duration of one frame, a remaining time in the duration of the frame can be used for frame insertion operation, so that a starting time of the frame insertion operation is advanced relative to the prior art. A duration of a frame referenced by the receiving module 121 in operation is calculated at the first framerate, namely a playback duration of each frame at the first framerate.

### - Frame insertion operation module 122

The frame insertion operation module 122 is arranged at the receiving end 12, is connected with the receiving module 121, and performs frame insertion operation on the two video data frames received by the receiving module 121 to produce at least one inserted video data frame. The frame insertion operation module 122 obtains two adjacent video data frames from the receiving module 121, and performs the frame insertion operation based on the two video data frames. The frame insertion operation module 122 is built in with a frame insertion operation algorithm, such as MEMC, namely Motion Estimation and Motion Compensation.

### - Framing module 123

The framing module 123 is arranged at the receiving end 12, is connected with the frame insertion operation module 122, and places the inserted video data frame between the two video data frames to form a set of video data frames to be played back. The framing module 123 obtains the inserted video data frame from the frame insertion operation module 122, and then obtains the received video data frame from the receiving module 121, the inserted video data frame is inserted between two video data frames used as calculation bases thereof to form a set of video data frames to be played back.

As a further improvement to the video data processing device, the transmitting module 112 transmits the video data frame to the receiving end 12 through a physical interface. The improved embodiment defines a connection mode of the transmitting end 11 and the receiving end 12, namely connection by the physical interface, and the physical interface is a video transmission interface such as MIPI, HDMI, DisplayPort, etc. The transmitting module 112 is connected with the receiving module 121 through the physical interface to transmit the video data frame.

As a further improvement to the video data processing device 10, the video data processing device 10 further includes the following module.

### - Playback module 124

The playback module 124 is arranged at the receiving end 12, is connected with the framing module 123, and displays the video data frame to be played back at the second framerate. The playback module 124 obtains the video data frame to be played back from the framing module 123 and plays back the video data frame at the second framerate. The playback module 124 may be a display screen and a display circuit thereof, the display circuit is used to convert the video data frame into an electric signal showing a physical pixel, and the display screen displays the physical pixel.

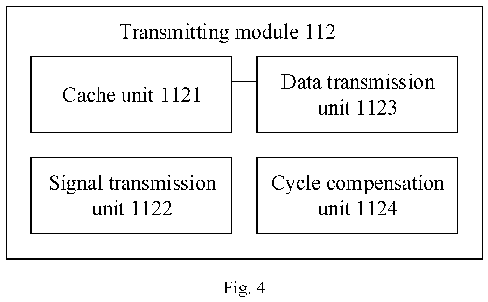

With reference to Fig. 4 which shows a structure flow chart complying with the transmitting module 112 according to a preferred embodiment of the present invention, the transmitting module 112 includes the following units.

### - Cache unit 1121

The cache unit 1121 is arranged at the transmitting end 11 and writes one video data frame within a duration of one frame corresponding to the first framerate. The cache unit 1121 may be a physical storage medium capable of storing data, such as a memory, a hard disk, etc.

### - Signal transmission unit 1122

The signal transmission unit 1122 is arranged at the transmitting end 11 and transmits a control signal and an auxiliary signal to the physical interface. The signal transmission unit 1122 implements transmission of the control signal and the auxiliary signal, and may also implement transmission of the audio signal. According to different physical interfaces, types of the control signals and interface protocols are all different, and different time sequences of the control signals may also exist. Some control signals may cooperate in a transmission process of the video data frame.

### - Data transmission unit 1123

The data transmission unit 1123 is arranged at the transmitting end 11, is connected with the cache unit 1121, and transmits the video data frame to the physical interface within a preset time threshold. The data transmission unit 1123 converts software data into an electric signal through a driver layer and transmits the electric signal through the physical interface. When the data transmission unit 1123 transmits the video data frame, the protocol of the physical interface shall be satisfied, and the transmission time of the video data frame shall be within a preset time threshold, wherein the time threshold is less than half of the transmission cycle, which actually limits the transmission time of the video data frame, so as to realize a technical effect of shortening video processing delay. According to the interface protocols of some physical interfaces, when the data transmission unit 1123 transmits the video data frame, the signal transmission unit 1122 needs to cooperate synchronously to control a state of the control signal. For example, high and low levels of VSYNC and HSYNC need to be controlled in a HDMI interface to perform auxiliary confirmation of data transmission.

### - Cycle compensation unit 1124

The cycle compensation unit 1124 waits for end of current transmission cycle. The cycle compensation unit 1124 is used to complement a duration of current transmission cycle to ensure a transmission rhythm of the video data frame. Since the conversion module 111 generates the video data frame at a speed according to the first framerate, even if the transmission speed of the video data frame becomes faster, the video data frame still needs to be transmitted after the transmitting module 111 generates the next video data frame. Therefore, after the data transmission unit 1123 completely transmits the video data frame, the cycle compensation unit 1124 remains the transmission cycle stable and unchanged.

As an improvement to the video data processing device 10 above, when the data transmission unit 1123 transmits the video data frame, a ratio of a frequency of a line synchronization signal to a reference frequency is adjusted to be at least 2; and the receiving module 121 performs frequency division on the received line synchronization signal according to the ratio. The improved embodiment further preferably selects the technical means of shortening the transmission time of the video data frame, which is realized by adjusting the frequency of the line synchronization signal during the transmission of the video data frame. The data transmission unit 1123 increases the frequency of the line synchronization signal by at least 1 time, thus shortening the transmission time of the video data frame by at least 1 time. The receiving module 121 is also provided with a frequency divider to perform frequency division on the received line synchronization signal to restore an actual line synchronization time sequence. A frequency division multiple of the frequency divider is the ratio of the frequency of the line synchronization signal to the reference frequency. The receiving module 121 also needs to cache the video data frame first and then process the video data frame in cooperation with the line synchronization signal after the frequency division, so as to realize display synchronization.

It should be noted that the embodiments of the present invention have a better implementation performance and are not intended to limit the present invention in any form. Those skilled in the art may change or decorate the technical contents disclosed above into equivalent effective embodiments. Any modification or equivalent change and decoration to the embodiments above according to the technical essence of the present invention without departing from the contents of the technical solutions of the present invention should still fall within the scope of the technical solutions of the present invention.

## Claims

1. A video data processing method for processing video data transmitted from a transmitting end working at a first framerate to a receiving end working at a second framerate, comprising the following steps:
S101: converting, by the transmitting end, the video data into at least one video data frame at the first framerate;
S102: transmitting once, by the transmitting end, a video data frame generated within a duration of a previous frame to the receiving end within a duration of each frame corresponding to the first framerate, wherein a ratio of a data transmission time in a transmission cycle of each video data frame to the transmission cycle is less than or equal to one half;
S103: receiving respectively, by the receiving end, one video data frame within durations of two adjacent frames corresponding to the first framerate;
S104: performing frame insertion operation on the two video data frames received in the step S103 to produce at least one inserted video data frame; and
S105: placing the inserted video data frame between the two video data frames to form a set of video data frames to be played back.

2. The video data processing method according to claim 1, wherein,
when the step S102 is implemented, the transmitting end transmits the video data frame to the receiving end through a physical interface.

3. The video data processing method according to claim 2, wherein,
the following steps are implemented within the duration of each frame corresponding to the first framerate in the step S102:
S102-1: writing one video data frame into a cache unit in the transmitting end;
S102-2: transmitting a control signal and an auxiliary signal to the physical interface;
S102-3: transmitting the video data frame to the physical interface within a preset time threshold; and
S102-4: waiting for end of current transmission cycle.

4. The video data processing method according to claim 3, wherein,
when the step S102-3 is implemented, a ratio of a frequency of a line synchronization signal to a reference frequency is adjusted to be at least 2; and
when the step S103 is implemented, frequency division is performed on the received line synchronization signal according to the ratio.

5. The video data processing method according to any one of claims 1 to 4, wherein,
after the step S105, the video data processing method further comprises the following step:
S106: displaying, by the receiving end, the video data frame to be played back at the second framerate.

6. A video data processing device, comprising a transmitting end working at a first framerate and a receiving end working at a second framerate, wherein the video data processing device comprises:
a conversion module arranged at the transmitting end and converting the video data into at least one video data frame at the first framerate;
a transmitting module arranged at the transmitting end, connected with the conversion module, and transmitting once a video data frame generated within a duration of a previous frame to the receiving end within a duration of each frame corresponding to the first framerate, wherein a ratio of a data transmission time in a transmission cycle of each video data frame to the transmission cycle is less than or equal to one half;
a receiving module arranged at the receiving end, and receiving respectively one video data frame within durations of two adjacent frames corresponding to the first framerate;
a frame insertion operation module arranged at the receiving end, connected with the receiving module, and performing frame insertion operation on the two video data frames received by the receiving module to produce at least one inserted video data frame; and
a framing module arranged at the receiving end, connected with the frame insertion operation module, and placing the inserted video data frame between the two video data frames to form a set of video data frames to be played back.

7. The video data processing device according to claim 6, wherein,
the transmitting module transmits the video data frame to the receiving end through a physical interface.

8. The video data processing device according to claim 7, wherein,
the transmitting module comprises:
a cache unit arranged at the transmitting end and writing one video data frame within a duration of one frame corresponding to the first framerate;
a signal transmission unit arranged at the transmitting end and transmitting a control signal and an auxiliary signal to the physical interface;
a data transmission unit arranged at the transmitting end, connected with the cache unit, and transmitting the video data frame to the physical interface within a preset time threshold; and
a cycle compensation unit waiting for end of current transmission cycle.

9. The video data processing device according to claim 8, wherein,
when the data transmission unit transmits the video data frame, a ratio of a frequency of a line synchronization signal to a reference frequency is adjusted to be at least 2; and
the receiving module performs frequency division on the received line synchronization signal according to the ratio.

10. The video data processing device according to any one of claims 6 to 9, wherein,
the video data processing device further comprises:
a playback module displaying the video data frame to be played back at the second framerate.
